# EUROPEAN PATENT SPECIFICATION

(11) **EP 3 318 116 B1**
(45) Date of publication and mention of the grant of the patent: **13.03.2019**
(21) Application number: 17199098.9
(22) Date of filing: 30.10.2017
(51) Int. Cl.: A01D 34/416, A01B 45/02

(54) **INTER-ROW CUTTING DEVICE**
ZWISCHENREIHENSCHNEIDVORRICHTUNG
DISPOSITIF DE COUPE ENTRE LES RANGÉES

(30) Priority: 08.11.2016 IT 201600112536
(43) Date of publication of application: 09.05.2018
(73) Proprietor: CABA INDUSTRIE S.R.L., 48018 Faenza (RA) (IT)
(72) Inventor: CAROLI, Bruno, 48018 Faenza (RA) (IT)
(74) Representative: Falzoni, Davide Aldo

(56) References cited:
- EP-A1- 2 979 531
- WO-A2-2006/060483
- US-A- 4 077 190
- US-A1- 2003 155 137
- US-A1- 2016 227 705

## Description

The present invention relates to an inter-row cutting device.

Examples of prior art cutting devices are disclosed in WO 2006/060483 A2, US 2016/227705 A1, EP 2979531 A1.

WO 2006/060483 A2 discloses a trimmer line, hook disk system forming a line trimmer head for attaching to a powered, rotational device to provide a line filament grass cutting/weed-removal action. The trimmer head includes a circular, protective, bottom base, a main trimmer head top, the two forming a disk shape, and a series of peripherally spaced, line holders; with these three basic elements fastened together for ultimate attachment to the powered device.

US 2016/227705 A1 discloses a trimmer head and a method for assembling a trimmer head. The trimmer head includes a housing rotatable about an axis, a receptacle in the housing to receive a portion of a trimmer line, and a locking member movable in a radial direction relative to the housing between a first position, in which the locking member engages the trimmer line to axially retain the trimmer line relative to the housing, and a second position, in which the trimmer line is movable relative to the receptacle.

EP 2979531 A1 discloses a trimmer head for a vegetation cutting machine, comprising a body adapted to be coupled to a driving shaft of the vegetation cutting machine so as to cause said body to rotate about a rotation axis, at least one rod comprising at least one retaining portion intended to hold a cutting filament in a determined direction. The body comprises a housing for receiving each end of said rod such that the rod axis is perpendicular to the rotation axis of the body and substantially tangential to the rotational path of the body. Said housing and said ends of the rod have respective shapes allowing at least two relative orientations of the rod with respect to the body: a first orientation wherein the determined direction of the filament is substantially parallel to the rotation axis of the body, and a second orientation wherein the determined direction of the filament is substantially radial and substantially perpendicular to the rotation axis of the body.

More specifically, the device according to the invention is preferably used for cutting plants or the like by means of cutting wires.

The device can be used in combination with an agricultural machine configured to clear weeds from areas and in particular in the context of an agricultural machine configured to clear weeds from areas interposed respectively between several pairs of successive rows, or in general interposed respectively between several pairs of successive elements, such as demarcation points or milestones.

A device according to this invention allows a flexibility and an ease of use of the cutting device which is considerably improved with respect to the cutting devices currently known for agricultural machinery aimed at clearing weeds from areas.

At present there are prior art cutting devices for agricultural machines which comprise a rotor designed to rotate about its axis of extension, for generating a movement of a group of cutting wires along a circular trajectory around the axis of extension. This movement of the cutting wires, which occurs whilst they project from the lateral surface of the rotor positioned around the axis of extension, is aimed at causing the cutting of the plants.

To ensure that the wires remain coupled to the rotor during its rotation, and project from the lateral surface, the currently known cutting devices comprise complicated coupling means, which require a long time for the operator to replace the wires once they are excessively worn.

Moreover, the coupling means of the currently known devices must be specifically designed for a certain type and/or a certain size of wires, which is detrimental to the flexibility and/or versatility of use of the cutting device.The aim of this invention is to provide a cutting device for agricultural machines which overcomes these drawbacks.

This aim is achieved by a cutting device having the features resulting from any combination of one or more of the appended claims.

This description relates to a cutting device for agricultural machines.

The cutting device comprises a rotor having or defining an axis of extension.

The rotor defines a lateral surface of the rotor. The lateral surface is situated around the axis of extension of the rotor. The rotor is designed to be operatively in rotation.

This rotation is preferably a rotation of the rotor about itself.

The rotation occurs preferably around the axis of extension.

The cutting device is configured so that the rotation of the rotor causes the dragging of at least one group of cutting wires. The cutting device is configured so that the dragging causes a movement of the group of cutting wires around the axis of extension. This movement is designed to perform a cutting of plants or the like by the cutting device.

This movement is preferably carried out along a trajectory located around the axis of extension of the rotor. The trajectory is preferably curved.

In order to cause the dragging of the cutting wires by part the rotor, the device comprises joining elements or means.

These joining means are configured to render the cutting wires integral with the rotation of the rotor. For this purpose, the joining means, define, for each respective wire of the group, a respective joining condition of the respective wire to the rotor. These joining means are configured so that, in the respective joining condition, each respective wire of the group projects from the lateral surface of the rotor. These joining means are configured so that, in the respective joining condition, each respective wire of the group is dragged by the rotation of the rotor in such a way as to perform the above-mentioned movement.

The joining means comprise at least one independent support. The independent support has a plurality of retaining elements.

Each respective retaining element of the plurality of retaining elements is configured for retaining a respective cutting wire of the group of cutting wires.

The rotor also comprises at least one seat made or situated in the rotor.

It should be noted that the rotor may also comprise two or more interconnected parts or a single part.

The at least one seat may be considered a part of the joining means.

The independent support can be housed or positioned, in a removable way, in the at least one seat made or situated in the rotor.

This seat extends preferably along an axis of elongation of the seat. The axis of elongation of the seat is preferably parallel to the axis of extension of the rotor.

Each respective retaining element of the plurality of retaining elements is configured to define a condition for retaining each respective wire of the group, in such a way that, when the respective wire is in the respective retaining condition and the support is housed in the seat, the respective wire is in its respective condition of joining to the rotor.

The cutting device might be configured so that the rotation of the rotor causes the dragging of a plurality of groups of cutting wires. The cutting device may be configured so that the dragging causes a respective movement of each of the respective groups of cutting wires around the axis of extension. The respective movement of each of the respective groups is designed to perform a cutting of plants or the like by the cutting device.

The respective movement of each of the respective groups preferably occurs along a trajectory located around the axis of extension of the rotor. The trajectory is preferably curved.

In order to cause the dragging of the cutting wires of each of the respective groups by the rotor, the device comprises a respective pair comprising a respective independent support and a respective seat.

Each of the respective pairs is configured to render the cutting wires of a respective group of the groups integral with the rotation of the rotor. For this purpose, each of the respective pairs defines, for each respective wire of the respective group, a respective joining condition of the respective wire to the rotor. Each of the respective pairs is configured so that, in the respective joining condition, each respective wire of the respective group projects from the lateral surface of the rotor. Each of the respective pairs is configured so that, in the respective joining condition, each respective wire of the respective group is dragged by the rotation of the rotor in such a way as to perform the respective above-mentioned movement.

For each of the pairs, the respective independent support can be housed or be positioned, in a removable way, in the respective seat of the respective pair.

The respective seat of each pair preferably extends along a respective axis of elongation of the seat. The respective axis of elongation is preferably parallel to the axis of extension of the rotor.

The respective seats of the respective pairs are preferably positioned in such a way that the respective axes of elongation are angularly distributed about the axis of extension of the rotor.

The features of a device according to this description are described in detail below, relating to a possible example embodiment of the device. The detailed description which follows is provided by way of a non-limiting example of the more general concepts claimed, and relates to the accompanying drawings, in which:
- Figure 1 is a perspective view of a possible embodiment of a cutting device according to this invention, with the cutting wires coupled to the device;
- Figure 2 is a perspective view of a part of the embodiment of Figure 1, without the cutting wires coupled to the device;
- Figure 3 is a perspective view of a component of the embodiment of Figures 1 and 2;
- Figure 4 is a view from above of the component of Figure 3;
- Figure 5 is a view of the part shown in Figure 2 in a longitudinal cross section and with the cutting wires coupled to the device;
- Figure 6 is a detail of Figure 5;
- Figure 7 is a view of the part shown in Figure 2 in a transversal cross section and with the cutting wires coupled to the device;
- Figure 8 is a view corresponding to Figure 5, but with some components removed relative to Figure 7.

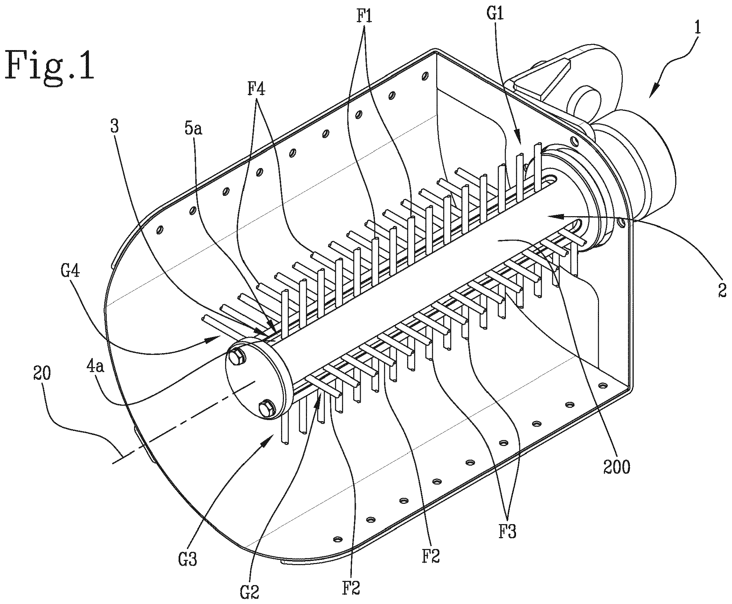

Figures 1 to 8 refer to a possible example embodiment of a cutting device according to this invention.

The cutting device according to this example embodiment is labelled 1.

The cutting device 1 comprises a rotor 2. The rotor 2 has or defines an axis of extension 20 of the rotor 2.

The rotor 2 in the embodiment illustrated can be considered as a shaft, and the axis of extension as an axis of extension of the shaft.

The shaft 2 defines or has a lateral surface 200 of the shaft 2. The lateral surface 200 is situated around the axis of extension 20 of the shaft 2. The shaft 2 is designed to be operatively in rotation, by means, for example, of motor-driven rotating means.

The rotation is a rotation of the shaft 2 on itself.

The rotation occurs around the axis of extension 20.

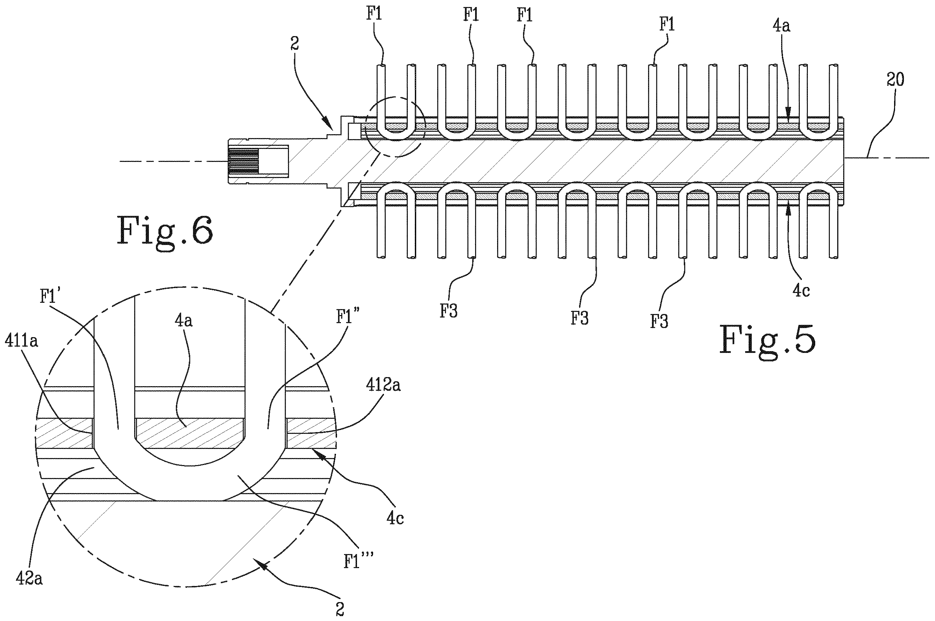

The cutting device 1 is configured so that the rotation of the shaft 2 causes the dragging of at least one first group of cutting wires. The first group of cutting wires is labelled G1, indicating in their entirety the wires of the first group G1. Some of the individual cutting wires of the first group are labelled F1, for example in Figures 1 and 5.

The device 1 is configured so that the dragging causes a movement of the first group of cutting wires G1 around the axis of extension 20. The movement of the first group G1 of cutting wires F1 is designed to perform a cutting of plants or the like by the cutting device 1.

The movement of the first group G1 of cutting wires F1, in the embodiment illustrated, occurs along a trajectory located around the axis of extension 20. The trajectory, in the embodiment illustrated, is circular.

In order to cause the dragging at least of the cutting wires F1 of the first group G1 by the shaft 2, the device 1 comprises at least a first support 4a and a first seat 5a.

The first support 4a and the first seat 5a define joining means, labelled 3 in Figure 1.

The first support 4a and the first seat 5a are configured to render the cutting threads F1 of the first group G1 integral with the rotation of the shaft 2. For this purpose, the first support 4a and the first seat 5a define, for each respective wire F1 of the first group G1, a respective joining condition of the respective wire F1 to the shaft 2. The first support 4a and the first seat 5a are configured so that, in its respective joining condition, each respective wire F1 of the first group G1, projects from the lateral surface 200 of the shaft 2. The first support 4a and the first seat 5a are configured so that, in its respective joining condition, each respective wire F1 of the first group G1 is dragged by the rotation of the shaft 2 in such a way as to perform the above-mentioned movement. The first independent support 4a has a plurality of retaining elements 41a.

Each respective retaining element 41a of the plurality of retaining elements 41a is configured for retaining a respective wire F1 of the first group G1.

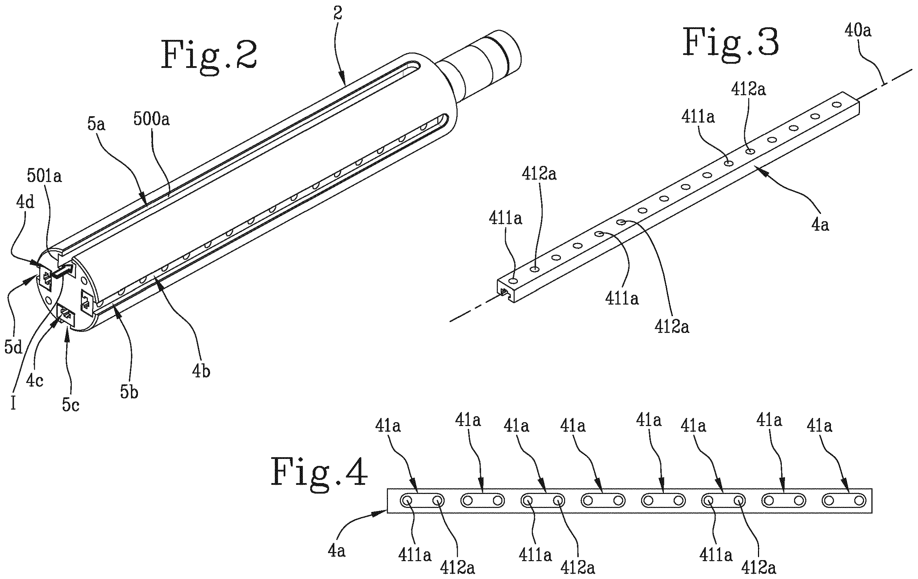

The first support 4a, in the embodiment illustrated, is elongate along its axis of elongation, labelled 40a in Figure 3.

In the embodiment illustrated, the retaining elements 41a are distributed or located in a row by side along the axis of elongation 40a of the first support 4a, as shown in particular in Figure 4.

In Figure 4 each retaining element 41a is indicated by a respective line which comprises inside it visually the respective retaining element, so that it can be identified.

The first seat 5a is made or situated in the shaft 2.

It should be noted that the shaft 2 may also comprise two or more interconnected parts or a single part.

The first independent support 4a can be housed or positioned, in a removable way, in the first seat 5a.

In the embodiment illustrated, the first support 4a and the first seat 5a are configured so that the first support 4a can be housed in the first seat 5a by inserting the first support 4a in the first seat 5a, so that, when the first support 4a is housed in the first seat 5a, the first support 4a is in a condition of insertion in the first seat 5a.

The insertion of the first support 4a, for example that showed in Figure 3, in the first seat 5a may be performed, for example, in the direction of the arrow I of Figure 2.

In the embodiment illustrated, the first seat 5a and the first support 4a are mutually at least partly shaped to match or complementary, in such a way that the first seat 5a can house in a sufficiently stable way the support 4a.

Each respective retaining element 41a of the plurality of retaining elements 41a is configured to define a condition for retaining a respective wire F1, in such a way that, when the respective wire F1 is in the respective retaining condition and the first support 4a is housed in the seat 5a, the respective wire F1 is in its respective condition of joining to the shaft 2.

In the embodiment illustrated, each of the retaining elements 41a comprises at least one perforated housing 411a.

Figure 3 only indicates some perforated housings 411a.

The at least one perforated housing 411a is made or situated in the first support 4. Each at least one perforated housing 411a is configured for retaining at least one respective wire F1 of the first group G1.

Each at least one perforated housing 411a is configured for retaining at least one respective wire F1 of the first group G1 by interference.

In the embodiment illustrated, each of the retaining elements 41a comprises at least one pair of perforated housings. The pair comprises a first perforated housing 411a and a second perforated housing 412a, made or situated in the first support 4a. The position of the first perforated housing 411a and the second perforated housing 412a of one of the retaining elements 41a is shown in the detail in Figure 6, which is an enlargement of the circled part of Figure 5.

It should be noted that each retaining element 41a could also comprise only one perforated housing 411a or 412a, or it could comprise more two or more perforated housings.

In Figure 4 each pair of perforated housings is situated in the respective line which, at a representative level, indicates the respective retaining element 41a. Inside each respective line, denoted by the numeral 41a, may be seen the respective first perforated housing 411a and the respective second perforated housing 412a.

Figures 3 and 4 indicate the respective first perforated housing 411a and second perforated housing 412a only of some of the retaining elements 41a.

Each of at least one pair of perforated housings 411a and 412a of a respective retaining element 41a is configured to retain with a snap-on connection at least one respective wire F1 of the first group G1.

Each of at least one pair of perforated housings 411a and 412a of a respective retaining element 41a is configured to retain with a snap-on connection at least one respective wire F1 of the first group G1, in such a way that:
- a first portion F1' of the respective wire F1 passes through the first perforated housing 411a of the respective pair of perforated housings 411a and 412a;
- a second portion F1" of the respective wire F1 passes through the second perforated housing 412a of the respective pair of perforated housings 411a and 412a.

The first perforated housing 411a and the second perforated housing 412a of each pair of perforated housings are in communication.

In the embodiment illustrated, the first perforated housing 411a and the second perforated housing 412a of each pair of perforated housings are in communication by means of at least one channel 42a. The channel 42a is formed or situated in the support 4.

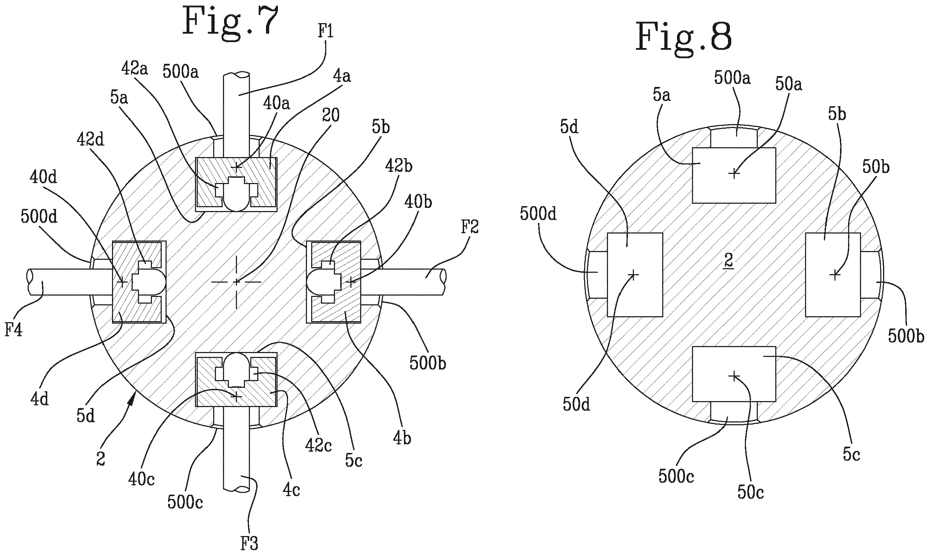

The channel 42a is indicated in Figure 6 and in Figure 7.

The channel 42a extends along the axis of elongation 40a of the first support 4a.

In the embodiment illustrated the channel 42a extends along the entire first support 4a.

The channel 42a might also extend only along a part of the first support 4a.

The channel 42a is configured to house an intermediate portion F1"' of the respective wire F1. The intermediate portion, when the respective wire F1 is retained by the pair of perforated housings 411a and 412a, is situated in the channel 42a and interposed between the first perforated housing 411a and the second perforated housing 412a.

In the embodiment illustrated, the first seat 5a is positioned along the shaft 2.

In the embodiment illustrated, the first seat 5a is elongate parallel to the axis of extension 20 of the shaft.

In the embodiment illustrated, the first seat 5a is elongate along a its axis of elongation 50a, shown only in Figure 8. It should be noted that Figure 8 is at right angles to the axis of elongation 50a.

In the embodiment illustrated, the axis of elongation 50a of the first seat 5a is parallel to the axis of extension 20 of the shaft 2.

In the embodiment illustrated, the first seat 5a and the first support 4a are configured so that, at the positioning of the first support 4a in the first seat 5a, and therefore when the first support 4a is in the condition of insertion in the first seat 5a, the first support 4a is positioned along the first seat 5a.

In the embodiment illustrated, when the first support 4a is positioned in the first seat 5a, the axis of elongation 40a of the first support 4 coincides operatively with the axis of elongation 50a of the first seat 5.

According to the invention, the first seat 5a comprises at least one lateral opening 500a positioned on the lateral surface 200 of the shaft 2. The lateral opening 500a is positioned on the lateral surface 200 of the shaft 2 in the sense that is directed transversely to the lateral surface 200 and/or to the axis of extension 20 of the shaft 2.

According to the invention, at least one of the retaining elements 41a of the first support 4a is positioned relative to the lateral opening 500a in such a way that the respective wire F1, in the respective joining condition to the shaft 2, projects from the lateral surface 200 defined by the shaft 2, passing through the lateral opening 500a of the first seat 5.

Preferably, each of the retaining elements 41a of the first support 4a is positioned relative to the lateral opening 500a in such a way that the respective wire F1, in the respective joining condition to the shaft 2, projects from the lateral surface 200 defined by the shaft 2, passing through the lateral opening 500a of the first seat 5.

In the embodiment illustrated, the first seat 5 comprises a front opening 501a, for the insertion of the support 4a in the seat 5a. In the embodiment illustrated, the front opening 501a is positioned on a section of the shaft 5 transversal to the axis of extension 20. In the embodiment illustrated, the front opening 501a is directed parallel to the axis of extension 20 of the shaft 2, for inserting and/or removing the first support 4a in/from the first seat 5a in the direction parallel to the axis of extension 20.

The insertion of the first support 4a in the first seat 5a may be performed, for example, in the direction of the arrow I of Figure 2.

The removal of the first support 4a from the first seat 5a may be performed, for example, in an opposite direction relative to the arrow I of Figure 2.

The cutting device 1 may be configured so that the rotation of the shaft 2 causes the dragging of a plurality of groups of cutting wires.

In the embodiment illustrated, the cutting device 1 is configured so that the rotation of the shaft 2 causes the dragging of a second group of cutting wires. The second group of cutting wires F2 is labelled G2, indicating in their entirety the wires of the second group G2. Some of the individual cutting wires of the second group are labelled F2, for example in Figure 1.

The device 1 is configured so that the dragging causes a movement of the second group of wires G2 around the axis of extension 20. The movement of the second group G2 of cutting wires F2 is designed to perform a cutting of plants or the like by the cutting device 1.

The movement of the second group G2 of cutting wires F2, in the embodiment illustrated, occurs along a trajectory located around the axis of extension 20. The trajectory, in the embodiment illustrated, is circular.

In order to cause the dragging at least of the cutting wires F2 of the second group G2 by the shaft 2, the device 1 comprises a second support 4b and a second seat 5b.

The second support 4b and the second seat 5b are configured to render the cutting threads F2 of the second group G2 integral with the rotation of the shaft 2.

For this purpose, the second support 4b and the second seat 5b define, for each respective wire F2 of the second group G2, a respective joining condition of the respective wire F2 to the shaft 2. The second support 4b and the second seat 5b are configured so that, in its respective joining condition, each respective wire F2 of the second group G2, projects from the lateral surface 200 of the shaft 2. The second support 4b and the second seat 5b are configured so that, in its respective joining condition, each respective wire F2 of the second group G2 is dragged by the rotation of the shaft 2 in such a way as to perform the above-mentioned movement.

In the embodiment illustrated, the cutting device 1 is configured so that the rotation of the shaft 2 causes the dragging of a third group of cutting wires. The third group of cutting wires F3 is labelled G3, indicating in their entirety the wires of the third group G3. Some of the individual cutting wires of the third group are labelled F3, for example in Figures 1 and 5.

The device 1 is configured so that the dragging causes a movement of the third group of wires G3 around the axis of extension 20. The movement of the third group G3 of cutting wires F3 is designed to perform a cutting of plants or the like by the cutting device 1.

The movement of the third group G3 of cutting wires F3, in the embodiment illustrated, occurs along a trajectory located around the axis of extension 20. The trajectory, in the embodiment illustrated, is circular.

In order to cause the dragging at least of the cutting wires F3 of the third group G3 by the shaft 2, the device 1 comprises a third support 4c and a third seat 5c.

The third support 4c and the third seat 5c are configured to render the cutting threads F3 of the third group G3 integral with the rotation of the shaft 2.

For this purpose, the third support 4c and the third seat 5c define, for each respective wire F3 of the third group G3, a respective joining condition of the respective wire F3 to the shaft 2. The third support 4c and the third seat 5c are configured so that, in its respective joining condition, each respective wire F3 of the third group G3, projects from the lateral surface 200 of the shaft 2. The third support 4c and the third seat 5c are configured so that, in its respective joining condition, each respective wire F3 of the third group G3 is dragged by the rotation of the shaft 2 in such a way as to perform the above-mentioned movement.

In the embodiment illustrated, the cutting device 1 is configured so that the rotation of the shaft 2 causes the dragging of a fourth group of cutting wires. The fourth group of cutting wires F4 is labelled G4, indicating in their entirety the wires of the fourth group G4. Some of the individual cutting wires of the fourth group are labelled F4, for example in Figure 1.

The device 1 is configured so that the dragging causes a movement of the fourth group of wires G4 around the axis of extension 20. The movement of the fourth group G4 of cutting wires F4 is designed to perform a cutting of plants or the like by the cutting device 1.

The movement of the fourth group G4 of cutting wires F4, in the embodiment illustrated, occurs along a trajectory located around the axis of extension 20. The trajectory, in the embodiment illustrated, is circular.

In order to cause the dragging at least of the cutting wires F4 of the fourth group G4 by the shaft 2, the device 1 comprises a fourth support 4d and a fourth seat 5d.

The fourth support 4d and the fourth seat 5d are configured to render the cutting threads F4 of the fourth group G4 integral with the rotation of the shaft 2.

For this purpose, the fourth support 4d and the fourth seat 5d define, for each respective wire F4 of the fourth group G4, a respective joining condition of the respective wire F4 to the shaft 2. The fourth support 4d and the fourth seat 5d are configured so that, in its respective joining condition, each respective wire F4 of the fourth group G4, projects from the lateral surface 200 of the shaft 2. The fourth support 4d and the fourth seat 5d are configured so that, in its respective joining condition, each respective wire F4 of the fourth group G4 is dragged by the rotation of the shaft 2 in such a way as to perform the above-mentioned movement.

The number of supports might differ from that shown.

Each of the supports of the plurality of supports 4a, 4b, 4c and 4d may have one or more of the features described above with reference to the first support 4a.

More specifically, Figure 7 denotes the axis of elongation 40b of the second support, the axis of elongation 40c of the support seat 4c, and the axis of elongation 40d of the fourth support 4d.

More specifically, Figure 7 indicates the channel 42b made or situated in the second support 4b, the channel 42c made or situated in the third support 4c, and the channel 42d made or situated in the fourth support 4d. The number of seats might differ from that shown.

Each of the seats of the plurality of seats 5a, 5b, 5c and 5d may have one or more of the features described above with reference to the first seat 5a.

More specifically, Figure 8 denotes the axis of elongation 50b of the second seat 5b, the axis of elongation 50c of the third seat 5c, and the axis of elongation 50d of the fourth seat 5d.

More specifically, Figures 7 and 8 indicate in profile the lateral opening 500b of the second seat 5b, the lateral opening 500c of the third seat 5c, and the lateral opening 500d of the fourth seat 5d.

The first support 4a can be housed or positioned, in a removable way, in the first seat 5a.

The second support 4b can be housed or positioned, in a removable way, in the second seat 5b.

The third support 4c can be housed or positioned, in a removable way, in the third seat 5c.

The fourth support 4d can be housed or positioned, in a removable way, in the fourth seat 5d.

In the embodiment illustrated, the first seat 5a, the second seat 5b, the third seat, 5c and the fourth seat 5d are angularly distributed around the axis of extension 20 of the shaft 2.

The respective axes of elongation 50a, 50b, 50c and 50d of the respective seats 5a, 5b, 5c and 5d are preferably parallel to each other.

It should be noted that the cutting device might comprise any number of pairs, each comprising a respective support and a respective seat. The respective support of each of the pairs may have one or more of the structural and/or functional features described above with reference to the first support 4a. The respective seat of each of the pairs may have one or more of the structural and/or functional features described above with reference to the first seat 5a
(1) preferably for cutting plants or the like by cutting wires (F1; F2; F3; F4), which can be used in the context of an agricultural machine configured to clear weeds from areas and in particular in the context of an agricultural machine configured to clear weds from areas interposed respectively between several pairs of successive rows, or in general interposed respectively between several pairs of successive elements, such as demarcation points or milestones. A cutting device (1) according to this invention allows a flexibility and an ease of use of the cutting device (1) which is considerably improved with respect to the cutting devices currently known for agricultural machinery aimed at clearing weeds from areas.

## Claims

1. A cutting device (1) for agricultural machines, comprising:
- a shaft (2) having an axis of extension (20) and defining a lateral surface (200) of the shaft (2) located around the axis of extension (20), the shaft (2) being designed to be operatively in rotation around the axis of extension (20) for dragging at least one group (G1) of cutting wires (F1);
- joining means (3) configured to render integral the wires (F1) of the group (G1) to the rotation of the shaft (2), so as to form, for each wire (F1) of the group (G1), a condition of joining to the shaft (2) wherein the wire (F1) projects from the lateral surface (200) of the shaft (2) and may be dragged by the rotation of the shaft (2),
wherein the joining means (3) comprise at least one independent support (4a) and at least one seat (5a) made in the shaft (2), the independent support (4a) having a plurality of retaining elements (41a) each of which configured for retaining a respective wire (F1) of the group (G1);
wherein the independent support (4a) can be housed, in a removable way, in the at least one seat (5a);
wherein the seat (5a) comprises at least one lateral opening (500a) positioned on the lateral surface (200) of the shaft (2);
**characterized in that** at least one of the retaining elements (41a) is positioned relative to the at least one lateral opening (500a) in such a way that the respective wire (F1), in the respective joining condition, projects from the lateral surface (200) of the shaft (2) passing through the lateral opening (500a).

2. The cutting device (1) according to claim 1, wherein each of the retaining elements (41a) comprises at least one perforated housing (411a) made in the support (4), each at least one perforated housing (411a) being configured for retaining at least one respective wire (F1) of the group (G1).

3. The cutting device (1) according to claim 2, wherein each at least one perforated housing (411a) is configured to retain the at least one respective wire (F1) of the group (G1) by interference.

4. The cutting device (1) according to any one of the preceding claims, wherein each of the retaining elements (41a) comprises at least one pair of perforated housings (411a, 412a) made in the support (4), each at least one pair of perforated housings (411a, 412a) being configured to retain in an interlocking fashion at least one respective wire (F1) of the group (G1) in such a way that a first portion (F1') of the respective wire (F1) passes through a first perforated housing (411a) of the pair and a second portion (F1") of the same respective wire (F1) passes through a second perforated housing (412a) of the pair.

5. The cutting device (1) according to claim 4, wherein the first perforated housing (411a) and the second perforated housing (412a) of each pair of perforated housings are in communication by means of at least one channel (42a), made in the support (4a), for housing an intermediate portion (F1"') of the respective wire (F1) interposed between the first perforated housing (411a) and the second perforated housing (412a).

6. The cutting device (1) according to any one of the preceding claims, wherein the at least one seat (5a) is elongate parallel to the axis of extension (20), the at least one seat (5a) and the support (4a) being configured so that, at the housing of the support (4a) in the seat (5a), the support (4a) is positioned along the seat (5a).

7. The cutting device (1) according to any one of the preceding claims, wherein the seat (5a) and the support (4a) are reciprocally at least partly shaped to match or complementary.

8. The cutting device (1) according to any one of the previous claims, wherein the seat (5a) and the lateral opening (500a) are elongated parallel to the axis of extension (20) of the shaft (2).

9. The cutting device (1) according to any one of the preceding claims, wherein the seat (5a) comprises a front opening (501a) facing parallel to the axis of extension (20) of the shaft (2) for inserting the support (4a) in the seat (5a).

10. The cutting device (1) according to any one of the preceding claims, wherein: the shaft (2) is designed to be operatively in rotation around the axis of extension (20) for dragging a plurality of groups (G1, G2, G3, G4) of cutting wires (F1; F2, F3; F4);
- the joining means (3) are configured to render integral the wires (F1; F2; F3; F4) of each of the groups (G1, G2, G3, G4) to the rotation of the shaft (2), so as to define, for each wire (F1; F2; F3; F4) of each of the groups (G1, G2, G3, G4), a condition of joining to the shaft (2) wherein the wire (F1; F2; F3; F4) projects from the lateral surface (200) of the shaft (2) and may be dragged by the rotation of the shaft (2),
- the joining means (3) comprise a plurality of independent supports (4) and a plurality of seats (31) made in the shaft (2), each of the independent supports (4) having a respective plurality of retaining elements (41) each of which configured for retaining a respective wire (F1; F2; F3; F4) of the respective group (G1, G2, G3, G4);
wherein each of the independent supports (4) can be housed, in a removable fashion, in a respective seat (5).

## Patentansprüche

1. Schneidvorrichtung (1) für landwirtschaftliche Maschinen, umfassend:
- eine Welle (2) mit einer Verlängerungsachse (20), die eine Seitenfläche (200) der Welle (2) definiert, die um die Verlängerungsachse (20) angeordnet ist, wobei die Welle (2) so ausgelegt ist, dass sie um die Verlängerungsachse (20) wirksam drehbar ist, um mindestens eine Gruppe (G1) von Schneiddrähten (F1) zu ziehen;
- Verbindungsmittel (3), die konfiguriert sind, so dass die Drähte (F1) der Gruppe (G1) mit der Drehung der Welle (2) einstückig ausgebildet sind, um für jeden Draht (F1) der Gruppe (G1) eine Bedingung für die Verbindung mit der Welle (2) zu bilden, wobei der Draht (F1) von der Seitenfläche (200) der Welle (2) vorsteht und durch die Drehung der Welle (2) gezogen werden kann,
wobei die Verbindungsmittel (3) mindestens einen unabhängigen Träger (4a) und mindestens einen Sitz (5a) umfassen, der in der Welle (2) ausgebildet sind, wobei der unabhängige Träger (4a) eine Vielzahl an Halteelementen (41a) aufweist, von denen ein jedes zum Halten eines jeweiligen Drahtes (F1) der Gruppe (G1) konfiguriert ist;
wobei der unabhängige Träger (4a) in dem mindestens einen Sitz (5a) abnehmbar aufgenommen werden kann; wobei der Sitz (5a) mindestens eine seitliche Öffnung (500a) umfasst, die an der Seitenfläche (200) der Welle (2) positioniert ist;
**dadurch gekennzeichnet, dass** mindestens eines der Halteelemente (41a) relativ zu der mindestens einen seitlichen Öffnung (500a) so positioniert ist, dass der jeweilige Draht (F1) im jeweiligen Verbindungszustand von der Seitenfläche (200) der Welle (2), die durch die seitliche Öffnung (500a) verläuft, vorsteht.

2. Schneidvorrichtung (1) nach Anspruch 1, wobei jedes der Halteelemente (41a) mindestens ein im Träger (4) ausgebildetes perforiertes Gehäuse (411a) umfasst, wobei mindestens ein jedes perforiertes Gehäuse (411a) zum Halten mindestens eines jeweiligen Drahtes (F1) der Gruppe (G1) konfiguriert ist.

3. Schneidvorrichtung (1) nach Anspruch 2, wobei mindestens ein jedes perforierte Gehäuse (411a) konfiguriert ist, um den mindestens einen jeweiligen Draht (F1) der Gruppe (G1) durch Interferenz zu halten.

4. Schneidvorrichtung (1) nach einem der vorhergehenden Ansprüche, wobei jedes der Halteelemente (41a) mindestens ein Paar perforierte Gehäuse (411a, 412a) umfasst, die in dem Träger (4) ausgebildet sind, wobei mindestens ein jedes Paar perforierte Gehäuse (411a, 412a) konfiguriert ist, um mindestens einen jeweiligen Draht (F1) der Gruppe (G1) ineinandergreifend so zu halten, dass ein erster Abschnitt (F1') des jeweiligen Drahtes (F1) durch ein erstes perforiertes Gehäuse (411a) des Paares und ein zweiter Abschnitt (F1") des gleichen jeweiligen Drahtes (F1) durch ein zweites perforiertes Gehäuse (412a) des Paares verläuft.

5. Schneidvorrichtung (1) nach Anspruch 4, wobei das erste perforierte Gehäuse (411a) und das zweite perforierte Gehäuse (412a) von jedem Paar der perforierten Gehäuse über mindestens einen in dem Träger (4a) ausgebildeten Kanal (42a) zur Aufnahme eines Zwischenabschnitts (F1'") des jeweiligen Drahtes (F1), der zwischen dem ersten perforierten Gehäuse (411a) und dem zweiten perforierten Gehäuse (412a) angeordnet ist, in Kommmunikation stehen.

6. Schneidvorrichtung (1) nach einem der vorhergehenden Ansprüche, wobei der mindestens eine Sitz (5a) parallel zur Verlängerungsachse (20) länglich ist, wobei der mindestens eine Sitz (5a) und der Träger (4a) so konfiguriert sind, dass der Träger (4a) am Gehäuse des Trägers (4a) im Sitz (5a) entlang des Sitzes (5a) positioniert ist.

7. Schneidvorrichtung (1) nach einem der vorhergehenden Ansprüche, wobei der Sitz (5a) und der Träger (4a) gegeneinander zumindest teilweise so geformt sind, dass sie übereinstimmen oder sich ergänzen.

8. Schneidvorrichtung (1) nach einem der vorhergehenden Ansprüche, wobei der Sitz (5a) und die seitliche Öffnung (500a) parallel zur Verlängerungsachse (20) der Welle (2) verlängert sind.

9. Schneidvorrichtung (1) nach einem der vorhergehenden Ansprüche, wobei der Sitz (5a) eine vordere Öffnung (501a) umfasst, die parallel der Verlängerungsachse (20) der Welle (2) zugewandt ist, um den Träger (4a) in den Sitz (5a) einzusetzen.

10. Schneidvorrichtung (1) nach einem der vorhergehenden Ansprüche, wobei: die Welle (2) so ausgelegt ist, dass sie um die Verlängerungsachse (20) wirksam drehbar ist, um eine Vielzahl an Gruppen (G1, G2, G3, G4) von Schneiddrähten (F1; F2, F3; F4) zu ziehen;
- die Verbindungsmittel (3) konfiguriert sind, damit die Drähte (F1; F2; F3; F3; F4) von jeder der Gruppen (G1, G2, G3, G4) mit der Drehung der Welle (2) einstückig ausgebildet sind, um so für jeden Draht (F1; F2; F3; F4) von jeder der Gruppen (G1, G2, G3, G4), eine Bedingung für die Verbindung mit der Welle (2) zu definieren, wobei der Draht (F1; F2; F3; F4) von der Seitenfläche (200) der Welle (2) vorsteht und durch die Drehung der Welle (2) gezogen werden kann,
- die Verbindungsmittel (3) eine Vielzahl an unabhängigen Trägern (4) und eine Vielzahl an Sitzen (31) umfassen, die in der Welle (2) ausgebildet sind, wobei jeder der unabhängigen Träger (4) eine jeweilige Vielzahl an Halteelementen (41) aufweist, von denen jedes zum Halten eines jeweiligen Drahtes (F1; F2; F3; F4) der jeweiligen Gruppe (G1, G2, G3, G4) konfiguriert ist;
wobei jede der unabhängigen Träger (4) in einem jeweiligen Sitz (5) abnehmbar aufgenommen werden kann.

## Revendications

1. Dispositif de coupe (1) pour machines agricoles, comprenant :
- un arbre (2) comportant un axe d'extension (20) et définissant une surface latérale (200) de l'arbre (2) située autour de l'axe d'extension (20), l'arbre (2) étant conçu pour être fonctionnellement en rotation autour de l'axe d'extension (20) pour tirer au moins un groupe (G1) de fils de coupe (F1) ;
- des moyens de raccordement (3) configurés pour rendre solidaires les fils (F1) du groupe (G1) de la rotation de l'arbre (2), de manière à former, pour chaque fil (F1) du groupe (G1), une condition de raccordement à l'arbre (2) dans lequel le fil (F1) dépasse de la surface latérale (200) de l'arbre (2) et peut être tiré par la rotation de l'arbre (2),
dans lequel les moyens de raccordement (3) comprennent au moins un support indépendant (4a) et au moins un siège (5a) réalisé dans l'arbre (2), le support indépendant (4a) comportant une pluralité d'éléments de retenue (41a) chacun étant configuré pour retenir un fil (F1) respectif du groupe (G1) ;
dans lequel le support indépendant (4a) peut être logé, d'une façon amovible, dans l'au moins un siège (5a) ; dans lequel le siège (5a) comprend au moins une ouverture latérale (500a) positionnée sur la surface latérale (200) de l'arbre (2) ;
**caractérisé en ce qu'**au moins un des éléments de retenue (41a) est positionné par rapport à l'au moins une ouverture latérale (500a) de manière à ce que le fil (F1) respectif, dans la condition de raccordement respective, dépasse de la surface latérale (200) de l'arbre (2) passant à travers l'ouverture latérale (500a).

2. Dispositif de coupe (1) selon la revendication 1, dans lequel chacun des éléments de retenue (41a) comprend au moins un logement perforé (411a) réalisé dans le support (4), chaque au moins un logement perforé (411a) étant configuré pour retenir au moins un fil (F1) respectif du groupe (G1).

3. Dispositif de coupe (1) selon la revendication 2, dans lequel chaque au moins un logement perforé (411a) est configuré pour retenir l'au moins un fil (F1) respectif du groupe (G1) par interférence.

4. Dispositif de coupe (1) selon l'une quelconque des revendications précédentes, dans lequel chacun des éléments de retenue (41a) comprend au moins une paire de logements perforés (411a, 412a) réalisés dans le support (4), chaque au moins une paire de logements perforés (411a, 412a) étant configurée pour retenir d'une façon imbriquée au moins un fil (F1) respectif du groupe (G1) de manière à ce qu'une première partie (F1') du fil (F1) respectif passe à travers un premier logement perforé (411a) de la paire et une seconde partie (F1") du même fil (F1) respectif passe à travers un second logement perforé (412a) de la paire.

5. Dispositif de coupe (1) selon la revendication 4, dans lequel le premier logement perforé (411a) et le second logement perforé (412a) de chaque paire de logements perforés sont en communication par le biais d'au moins un canal (42a), réalisé dans le support (4a), pour loger une partie intermédiaire (F1'") du fil (F1) respectif interposée entre le premier logement perforé (411a) et le second logement perforé (412a).

6. Dispositif de coupe (1) selon l'une quelconque des revendications précédentes, dans lequel l'au moins un siège (5a) est allongé parallèlement à l'axe d'extension (20), l'au moins un siège (5a) et le support (4a) étant configurés de sorte que, en correspondance du logement du support (4a) dans le siège (5a), le support (4a) est positionné le long du siège (5a).

7. Dispositif de coupe (1) selon l'une quelconque des revendications précédentes, dans lequel le siège (5a) et le support (4a) sont réciproquement au moins en partie façonnés pour se correspondre ou être complémentaires.

8. Dispositif de coupe (1) selon l'une quelconque des revendications précédentes, dans lequel le siège (5a) et l'ouverture latérale (500a) sont allongés parallèlement à l'axe d'extension (20) de l'arbre (2).

9. Dispositif de coupe (1) selon l'une quelconque des revendications précédentes, dans lequel le siège (5a) comprend une ouverture antérieure (501a) orientée parallèlement à l'axe d'extension (20) de l'arbre (2) pour introduire le support (4a) dans le siège (5a).

10. Dispositif de coupe (1) selon l'une quelconque des revendications précédentes, dans lequel l'arbre (2) est conçu pour être fonctionnellement en rotation autour de l'axe d'extension (20) pour tirer une pluralité de groupes (G1, G2, G3, G4) de fils de coupe (F1 ; F2 ; F3 ; F4) ;
- les moyens de raccordement (3) sont configurés pour rendre solidaires les fils (F1 ; F2 ; F3 ; F4) de chacun des groupes (G1, G2, G3, G4) de la rotation de l'arbre (2), de manière à définir, pour chaque fil (F1 ; F2 ; F3 ; F4) de chacun des groupes (G1, G2, G3, G4), une condition de raccordement à l'arbre (2) dans lequel le fil (F1 ; F2 ; F3 ; F4) dépasse de la surface latérale (200) de l'arbre (2) et peut être tiré par la rotation de l'arbre (2),
- les moyens de raccordement (3) comprennent une pluralité de supports indépendants (4) et une pluralité de sièges (31) réalisés dans l'arbre (2), chacun des supports indépendants (4) comportant une pluralité respective d'éléments de retenue (41) chacun étant configuré pour retenir un fil (F1 ; F2 ; F3 ; F4) respectif du groupe (G1, G2, G3, G4) respectif ;
dans lequel chacun des supports indépendants (4) peut être logé, d'une façon amovible, dans un siège (5) respectif.
